# FASCICULE DE BREVET EUROPEEN

(11) **EP 0 579 560 B1**
(45) Date de publication et mention de la délivrance du brevet: **03.04.1996**
(21) Numéro de dépôt: 93420291.2
(22) Date de dépôt: 05.07.1993
(51) Int. Cl.: H02K 37/14, H02K 5/167, H02K 1/27

(54) **Moteur pas à pas**
Schrittmotor
Stepping motor

(30) Priorité: 16.07.1992 FR 9209120
(43) Date de publication de la demande: 19.01.1994
(73) Titulaire: CROUZET Automatismes, F-26000 Valence (FR)
(72) Inventeur: Guinet, Michel, F-07500 Granges-les-Valence (FR); Fogeron, Jean-Pierre, F-07130 Saint Peray (FR)
(74) Mandataire: de Beaumont, Michel

(56) Documents cités:
- DE-A- 3 514 895
- GB-A- 2 025 151
- PATENT ABSTRACTS OF JAPAN vol. 10, no. 217 (E-423)(2273) 29 Juillet 1986 ; & JP-A-61 054 839
- PATENT ABSTRACTS OF JAPAN vol. 14, no. 51 (E-881)(3994) 30 Janvier 1990 ; & JP-A-12 78 251
- PATENT ABSTRACTS OF JAPAN vol. 4, no. 170 (E-035) 22 Novembre 1980 ; & JP-A-55 117 452
- PATENT ABSTRACTS OF JAPAN vol. 13, no. 317 (E-789)(3665) 19 Juillet 1989 ; & JP-A-10 85 559
- PATENT ABSTRACTS OF JAPAN vol. 16, no. 18 (E-1155) 17 Janvier 1992 ; & JP-A-32 35 653

## Description

La présente invention concerne les moteurs pas à pas et en particulier des éléments constituant un moteur pas à pas.

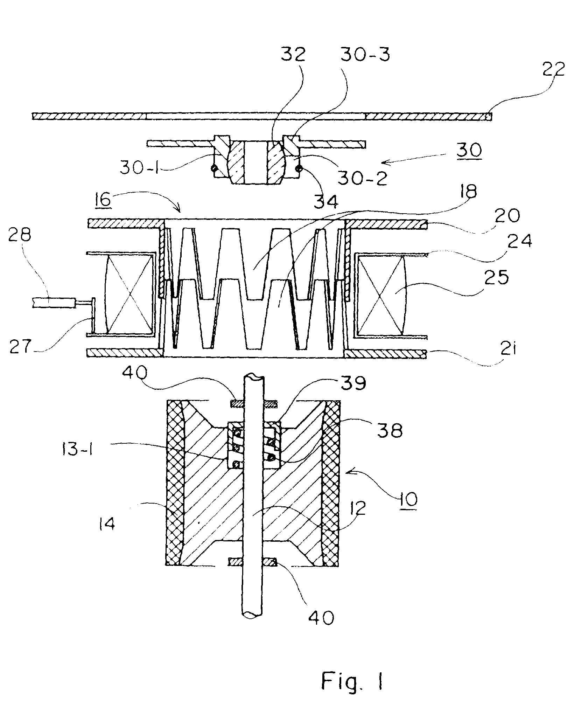

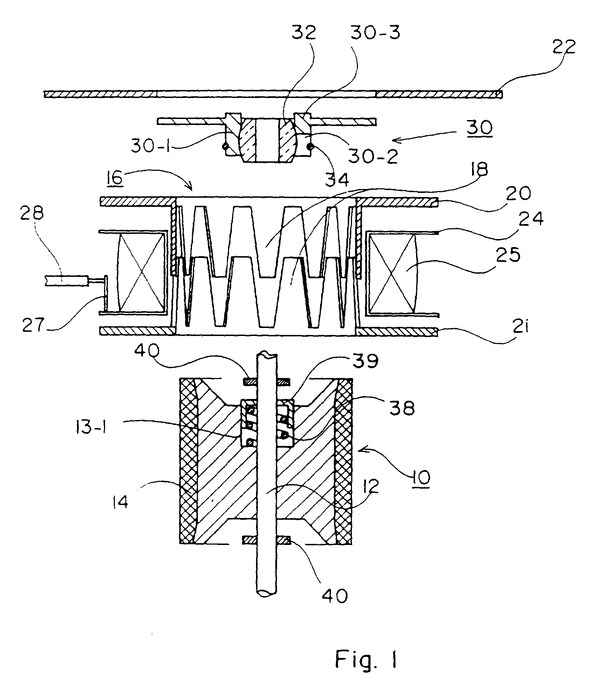

La figure 1 représente en vue éclatée une structure de moteur pas à pas classique. Ce moteur comprend un rotor 10 constitué d'un axe 12 en acier traité emmanché dans une pièce centrale 13 (appelée ci-après pièce rotorique) en matière plastique. L'axe 12 peut être immobilisé en rotation par rapport à la pièce rotorique 13 par divers moyens classiques, tels que ceux décrits dans la demande de brevet français 2 439 501. Un aimant permanent 14 en forme de bague coaxiale à l'axe 12 est solidarisé de la pièce rotorique 13, par exemple par surmoulage de celle-ci sur l'aimant. L'aimant 14 comprend une pluralité de zones axiales aimantées alternativement selon des polarités opposées.

Un stator comprend deux couples (un seul couple 16 est représenté) de rangées de dents polaires 18 axiales entourant le rotor 10. Les rangées de dents 18 sont solidaires respectivement de deux disques annulaires radiaux 20, 21 et s'étendent perpendiculairement à ces disques. Dans la figure 1, les dents du disque 20 s'étendent vers le bas et sont entrelacées aux dents du disque 21, s'étendant vers le haut. Une bride de fixation 22 est rapportée sur le disque annulaire 20. Autour des rangées de dents 18 entrelacées, entre les disques 20 et 21, est disposée une cage 24 en un matériau isolant dans laquelle est enroulée une bobine 25. Dans le cas d'un moteur bipolaire, il y a une seule bobine 25 et, dans le cas d'un moteur unipolaire, il y a deux bobines 25 constituées de deux fils enroulés simultanément. Les bornes des bobines sont soudées sur des cosses 27 solidaires de la cage 24, auxquelles sont connectés des câbles électriquement isolés 28 d'alimentation du moteur.

L'ensemble statorique formé des éléments 18 à 28 peut être surmoulé dans une résine non représentée. Un deuxième ensemble statorique est juxtaposé axialement à l'ensemble statorique 18-28 pour former le deuxième couple 16 susmentionné de rangées de dents. Les deux ensembles statoriques sont positionnés en rotation de manière prédéterminée l'un par rapport à l'autre autour de l'axe 12.

Sur l'ensemble statorique représenté 18-28 est fixée une pièce radiale de fermeture 30 comprenant une rotule 32 de guidage de l'axe 12. Une même pièce 30 non représentée est fixée sur l'ensemble statorique non représenté, de l'autre côté du rotor 10. La rotule 32 est guidée dans une zone centrale épaissie 30-1 de la pièce de fermeture 30. Cette zone épaissie 30-1 comprend une partie rapportée 30-2 destinée à permettre le montage de la rotule 32. La pièce rapportée 30-2 est maintenue grâce à un jonc annulaire 34 entourant la zone épaissie 30-1 et la pièce rapportée 30-2. Une saillie annulaire 30-3 de la pièce 30, coaxiale à l'axe 12, sert dans certaines applications à centrer le moteur. Il existe des moteurs pas à pas de moins bonne qualité qui sont munis de paliers lisses à la place des rotules.

Le rotor 10 est immobilisé axialement grâce à un système à ressort 38. Le ressort 38 est centré sur l'axe 11 et disposé dans un évidement cylindrique 13-1 de la pièce rotorique 13. Ce ressort s'appuie entre la pièce 13 et une chape 39 coulissant dans l'évidement 13-1. Des rondelles 40 en un matériau à faible coefficient de frottement sont disposées autour de l'axe 12 respectivement entre la rotule 32 représentée et la chape 39, et entre la pièce centrale 13 et la rotule de la pièce de fermeture non représentée.

Les éléments 18, 20 et 21 sont en un matériau magnétique. Une ceinture non représentée, également en un matériau magnétique, ferme la circonférence des ensembles statoriques 18-28 et entre en contact avec les disques annulaires 20 et 21 afin d'assurer une fermeture de circulation de flux magnétique.

Un tel moteur comprend environ 30 pièces dont certaines sont coûteuses en elles-mêmes (axe traité 12, rotules 32 et leurs pièces de fermeture 30 associées...). Ce nombre élevé de pièces entraîne des coûts élevés de contrôle et de montage du moteur, ainsi que des difficultés d'automatisation.

La demanderesse a constaté que la présence dans un tel moteur d'un grand nombre de pièces provient de façon générale de la nécessité de compenser le fait que certaines pièces, notamment les groupes statoriques 18-28, présentent des dimensions et des défauts de géométrie variables d'une pièce à l'autre. En effet, il faut prévoir un guidage à rotules 32 car on n'est pas sûr du parallélisme entre les deux pièces de fermeture 30 et de l'alignement des paliers (32), ces paramètres dépendant essentiellement du parallélisme et de l'alignement incertains entre les disques 20 et 21 des ensembles statoriques 18-28. En outre, il faut prévoir un système de rattrapage de jeu axial 38, 39, 40, car on n'est pas sûr de la distance séparant les pièces de fermeture 30, dépendant essentiellement de la hauteur incertaine des ensembles statoriques. Il est de toutes façons nécessaire de prévoir un palier (32) lubrifié (le matériau des rotules 32 est généralement autolubrifiant) entre deux pièces métalliques (12, 30) non lubrifiées en frottement.

En outre, l'utilisation de fil émaillé pour les bobines nécessite de prévoir : des cages isolantes 24 pour éviter d'écailler l'émail par frottement contre des parties métalliques, des cosses 27 pour connecter les bobines, et une protection contre les agressions extérieures, telle qu'un surmoulage ou un capot en matière plastique.

Un objet de la présente invention est donc de prévoir une structure de moteur pas à pas permettant d'employer environ trois fois moins de pièces qu'une structure classique.

Cet objet est atteint grâce à un moteur pas à pas comprenant : un rotor muni d'un axe et, en périphérie, d'un aimant permanent aimanté selon de multiples faces axiales de polarités alternées ; un stator muni de deux couples de rangées de dents polaires entourant le rotor, les dents respectives des rangées d'un couple étant axialement entrelacées ; au moins une bobine coaxiale à l'axe et associée à chaque couple de rangées de dents ; et deux flasques radiaux disposés de part et d'autre du rotor munis chacun d'une zone centrale repliée en forme de bague servant de palier audit axe,
le rotor comprenant une pièce rotorique en matière plastique formant ledit axe et supportant l'aimant ;
lesdites dents polaires faisant partie d'une même pièce tubulaire, la cohésion de la pièce tubulaire étant assurée par des zones amincies de celle-ci reliant entr'elles les rangées de dents de chaque couple ;
un disque annulaire solidaire de la pièce tubulaire et disposé autour de celle-ci au niveau de l'interface entre les deux couples de rangées de dents et formant avec les flasques deux zones destinées à recevoir chacune au moins une bobine ;
les bobines étant constituées de fil isolé directement enroulé autour de la pièce tubulaire.

Selon un mode de réalisation de la présente invention, lesdites dents polaires font partie d'une même pièce tubulaire, la cohésion de la pièce tubulaire étant assurée par des zones amincies de celle-ci, reliant entre elles les rangées de dents de chaque couple.

Selon un mode de réalisation de la présente invention, le moteur comprend un disque annulaire solidaire de la pièce tubulaire et disposé autour de celle-ci au niveau de l'interface entre les deux couples de rangées de dents et formant avec les flasques deux zones destinées à recevoir chacune au moins une bobine.

Selon un mode de réalisation de la présente invention, les bobines sont constituées de fil isolé directement enroulé autour de la pièce tubulaire.

Selon un mode de réalisation de la présente invention, les flasques comprennent des tétons de centrage de ladite pièce tubulaire, ces tétons ainsi que ladite bague servant de palier, étant obtenus à partir d'une même pièce plate par emboutissage et/ou matriçage.

Selon un mode de réalisation de la présente invention, ladite pièce tubulaire est formée d'une tôle plate enroulée dans laquelle sont prédécoupées les rangées de dents.

Selon un mode de réalisation de la présente invention, au moins une extrémité dudit axe comprend une forme spécifique obtenue par une même opération de moulage dudit rotor et de l'axe.

Selon un mode de réalisation de la présente invention, ledit axe est muni d'un trou axial traversant.

Ces objets, caractéristiques et avantages ainsi que d'autres de la présente invention seront décrits en détail grâce à des modes de réalisation apparaissant dans les figures jointes parmi lesquelles :
la figure 1, précédemment décrite, représente une structure de moteur pas à pas classique ; et
la figure 2 représente une structure de moteur pas à pas selon la présente invention.

A la figure 2, un mode de réalisation de structure de moteur pas à pas selon la présente invention est représenté en vue de coupe partiellement éclatée. Ce moteur comprend un rotor 10 constitué d'un aimant en forme de bague 14, tel que celui de la figure 1 surmoulé d'une pièce rotorique 50 en matière plastique. Dans cette pièce rotorique 50 sont réalisés deux demi-axes 51 s'étendant de part et d'autre de la pièce. Ces demi-axes 51 sont par exemple obtenus par moulage, surmoulage ou tournage. Dans la pièce 50, on a également formé, à la base des demi-axes 51, des épaulements 52 dont les faces radiales sont distantes d'une valeur précise obtenue facilement par l'un des procédés susmentionnés. Le rôle de ces épaulements sera exposé ultérieurement.

Les demi-axes 51 sont guidés chacun dans une zone en forme de bague 54 de deux flasques 55 fermant le moteur de part et d'autre du rotor 10. En utilisant une matière plastique à faible coefficient de frottement pour la pièce rotorique 50, il n'est pas nécessaire de prévoir un palier lubrifié entre les demi-axes 51 et les bagues 54. En outre, un axe en matière plastique présente une haute résistance à la corrosion.

Une pièce tubulaire 57 coaxiale au demi-axe 51 entoure le rotor 10 et relie entre eux les deux flasques 55. Des tétons 55-1 formés sur les flasques 55 sont disposés sur un cercle et permettent de centrer la pièce tubulaire 57 par rapport aux bagues 54, et donc par rapport au rotor 10. La pièce tubulaire 57 est rendue solidaire des flasques 55, par exemple, par encastrement autour des tétons 55-1 ou bien par soudage électrique ou au laser à ces tétons. Dans la pièce tubulaire 57 sont formées des rangées de dents polaires 59 correspondant aux deux couples de rangées de dents décrits en relation avec la figure 1. Chaque couple de rangées est formé par découpe discontinue en zig zag de la pièce tubulaire 57 selon le sens circonférenciel. Les zones de discontinuité de la découpe assurent la cohésion de la pièce tubulaire et sont situées, par exemple, au niveau des sommets des dents. Comme cela est représenté, et de façon classique, les couples de rangées sont décalés l'un par rapport à l'autre d'un "quart de période" de répétition des dents.

Selon l'invention, il n'est plus nécessaire de prévoir de paliers tels que les rotules 32 de la figure 1, car il est facile de réaliser un bon parallélisme entre les zones extrêmes de la pièce tubulaire 57 qui assurent le parallélisme entre les flasques 55. Un bon alignement des bagues 54 est également facile à réaliser car les flasques 55 sont solidaires d'une seule pièce (57) de structure simple (cylindre) dont la géométrie est facilement maitrisable avec les techniques de fabrication actuelles.

Autour de la pièce tubulaire 57, au niveau de la zone de séparation des couples de rangées de dents, est emmanché un disque annulaire 61 séparant l'intérieur du moteur en deux zones de bobinage. Une ceinture 62 entrant en contact avec les flasques 55 et le disque 61, finit de fermer le moteur. D'autres moyens de fermeture du moteur pourront être prévus, tels que des parois cylindriques formées par emboutissage de l'un ou des deux flasques 55. La fonction du stator du moteur est assurée par les deux flasques 55, la pièce tubulaire 57, le disque annulaire 61 et la ceinture 62. Ces pièces 55, 57, 61 et la ceinture sont donc en un matériau magnétique. Le moyen de fixation de la ceinture pourra être similaire à celui d'un moteur classique, par exemple par soudage.

Les épaulements 52 susmentionnés de la pièce rotorique 50 en matière plastique servent à positionner axialement le rotor 10 et s'appuient respectivement sur les flasques 55. Ce positionnement axial est suffisant car la hauteur de la pièce tubulaire 57, distance séparant les flasques 55, peut être réalisée avec précision. On évite l'emploi de rondelles (40), car le rôle de ces dernières est assuré par les épaulements 52 en matière plastique.

Les discontinuités de découpe des dents 59, assurant la cohésion de la pièce tubulaire 57, constituent lors du fonctionnement du moteur des court-circuits magnétiques saturables qui entraînent une perte de couple du moteur.

Toutefois, grâce à cette réalisation des dents 59 par découpe discontinue, on obtient un positionnement précis des dents 59 les unes par rapport aux autres. Ceci permet de compenser la perte de couple en réalisant des dents qui occupent une surface plus importante, ce qui n'est pas possible dans un moteur classique où il faut prévoir une marge suffisante autour des dents pour pallier des défauts de positionnement. La meilleure précision de positionnement des dents 59 entraîne aussi une avantageuse réduction du couple résistant lorsque le moteur n'est pas alimenté.

En outre, les courts-circuits magnétiques permettent de réaliser une détection économique de la position de rotor grâce à un circuit de détection, tel que celui décrit dans la demande de brevet européen 0 420 501, exploitant la saturation du stator en fonction de la position du rotor. En effet, les court-circuits magnétiques se saturent plus ou moins selon la position de l'aimant 14 par rapport aux dents 59 et entraînent une variation de l'inductance des bobines qui peut alors être détectée. Cette saturation rapide n'est par ailleurs pas un inconvénient.

Des bobines 63 sont directement enroulées autour de la pièce tubulaire 57 entre les flasques 55 et le disque annulaire 61. De préférence, le fil des bobines est un fil gainé de faible diamètre et pourra donc servir directement de câble d' alimentation du moteur sans qu'il soit nécessaire de passer par l'intermédiaire de cosses 27 et de câbles gainés supplémentaires 28, et de prévoir un surmoulage de résine. L'augmentation du volume des bobines occasionnée par les gaines des fils est compensée par le gain de volume lié à l'absence des cages 24 et de la résine de surmoulage.

Les bagues 54 et les tétons 55-1 peuvent être réalisés en une seule opération d' emboutissage et/ou de matriçage des flasques 55. Si l'on a besoin d'une bride de fixation du moteur, l'un des flasques 55 sera prévu pour cette fonction, par exemple, en le réalisant de diamètre plus grand que celui du moteur et en le munissant de trous périphériques. La fonction de centrage de la saillie annulaire 30-3 de la figure 1 peut être réalisée par le bord circulaire d'un des flasques 55, car ce bord peut facilement être réalisé coaxial à la bague 54. Si l'on veut munir le moteur d'un pignon, celui-ci pourra être directement réalisé sur l'un des demi-axes 51 lors d'une même opération de moulage. Les demi-axes 51 pourront être munis de toute autre forme moulable, telle qu'un méplat, un excentrique, un filetage, un moletage... Comme ces formes font partie intégrante de l'axe, on élimine le problème de la tenue en rotation de ces formes, qui se présente lorsqu'on utilise, par exemple, des pignons en matière plastique emmanchés sur l'axe.

La pièce tubulaire 57 peut, à l'origine, être une plaque plane dans laquelle on découpe les dents 59 selon les procédés classiques, cette plaque étant ensuite enroulée et maintenue en position enroulée grâce au disque annulaire 61. Bien entendu, on pourra directement découper les dents 59 dans un tube.

On peut prévoir un trou axial traversant le rotor 10 et les demi-axes 51, ce qui permet au moteur selon l'invention, avant sa fermeture par la ceinture 62, d'être monté sur un tour à bobiner classique pour réaliser les bobines 63, en utilisant un outillage spécifique de montage très simple.

## Revendications

1. Moteur pas à pas comprenant :
- un rotor (10) muni d'un axe (51) et, en périphérie, d'un aimant permanent (14) aimanté selon de multiples faces axiales de polarités alternées ;
- un stator muni de deux couples de rangées de dents polaires (59) entourant le rotor, les dents respectives des rangées d'un couple étant axialement entrelacées ;
- au moins une bobine (63) coaxiale à l'axe et associée à chaque couple de rangées de dents ; et
- deux flasques radiaux (55) disposés de part et d'autre du rotor, munis chacun d'une zone centrale (54) repliée en forme de bague servant de palier audit axe ;
caractérisé en ce que
le rotor comprend une pièce rotorique (50) en matière plastique formant ledit axe (51) et supportant l'aimant ;
lesdites dents polaires font partie d'une même pièce tubulaire (57), la cohésion de la pièce tubulaire étant assurée par des zones amincies de celle-ci reliant entre elles les rangées de dents de chaque couple ;
un disque annulaire (61) est solidaire de la pièce tubulaire (57) et disposé autour de celle-ci au niveau de l'interface entre les deux couples de rangées de dents (59) et formant avec les flasques (55) deux zones destinées à recevoir chacune au moins une bobine (63) ; et
les bobines sont constituées de fil isolé directement enroulé autour de la pièce tubulaire (57).

2. Moteur selon la revendication 1, caractérisé en ce que les flasques (55) comprennent des tétons (55-1) de centrage de ladite pièce tubulaire (57), ces tétons ainsi que ladite bague (54) servant de palier, étant obtenus à partir d'une même pièce plate par emboutissage et/ou matriçage.

3. Moteur selon la revendication 1, caractérisé en ce que ladite pièce tubulaire (57) est formée d'une tôle plate enroulée dans laquelle sont prédécoupées les rangées de dents (59).

4. Moteur selon la revendication 1, caractérisé en ce qu'au moins une extrémité dudit axe (51) comprend une forme spécifique obtenue par une même opération de moulage dudit rotor (10) et de l'axe.

5. Moteur selon la revendication 1, caractérisé en ce que ledit axe (51) est muni d'un trou axial traversant.

## Patentansprüche

1. Schrittmolor der folgendes aufweist:
Einen Rotor (10) mit einer Achse (51) und am Umfang mit einem Permanetenmagnoten (14), der gemäß der mehrfachen Axialstirnseiten mit abwechselnder Polarität magnetisiert ist;
einen Stator, mit zwei Paaren von Polzahnreihen (59), die den Rotor umgeben, wobei die jeweiligen Zähne der Reihen eines Paares axial in Eingriff stehen;
zumindest eine Spule bzw. Wicklung (63), die zur Achse koaxial ist und einem jeden Zahnreihenpaar zugeordnet bzw. assoziiert ist; und
zwei Radialflansche (55), die auf beiden Seilen des Rotors angeordnet sind, und zwar beide versehen mit einer zentralen Zone (54), die in Form eines Ringes zurückgebogen ist, um als Lager für die Achse zu dienen;
Dadurch gekennzeichnet, daß
der Rotor einen Rotorteil (50) aus Plastikmaterial aufweit, der die Achse (51) bildet und den Magneten trägt;
wobei die Polzähne Teil eines gleichen Rohrteils (57) sind, wobei der Zusammenhalt des Rohrteils durch verjüngte bzw. dünne Zonen des selben sichergestellt wird, die die Zahnreihen einen jaden Paares untereinander verbinden;
eine ringförmige Scheibe (61), die aus einem Teil mit den Rohrteil (57) ist, und um das Selbe herum angeordnet ist, und zwar auf der Höhe der Schnittstelle zwischen den beiden Zahnreihenpaaren (59), und die mit den Flanschen (55) zwei Zonen bildet, die dazu bestimmt, sind, jeweils zumindest eine Spule bzw. Wicklung (63) aufzunehmen; und wobei
die Spulen aus einem isolierten Draht gebildet sind, der direkt um den Rohrteil (57) gewickelt ist.

2. Motor nach Anspruch 1, dadurch gekennzeichnet, daß die Flansche (55) Zentrieransätze (55-1) des Rohrteils (57) aufweisen, wobei diese Ansätze genauso wie der Ring (54) als Lager dienen, wobei die Ansätze ausgehend von einem gleichen flachen Teil durch Tiefziehen und/oder Gesenkformen erhalten werden.

3. Motor nach Anspruch 1, dadurch gekeinnzeichnet, daß der Rohrteil (57) aus einem flachen Blech gebildet ist, in das die Zahnreihen (59) vorausgeschnitten sind.

4. Motor nach Anspruch 1, dadurch gekennzeichnet, daß zumindest ein Ende der Achse (51) eine spezielle Form aufweist, die durch den gleichen Form- bzw. Gießvorgang des Rotors (10) und der Achse erhalten wird.

5. Motor nach Anspruch 1, dadurch gekennzeichnet, daß die Achse (51) mit einem axial durchgehenden Loch versehen ist.

## Claims

1. A stepper motor comprising:
- a rotor (10) having a shaft (51) and, at its periphery, a permanent magnet (14) magnetized according to a plurality of axial surfaces of alternate polarities;
- a stator having two pairs of rows of polar teeth (59) surrounding the rotor, the respective teeth of the rows of a pair of teeth being axially interlaced;
- at least one coil (63) coaxial with the shaft and associated with each pair of rows of teeth; and
- two radial flanges (55) disposed on either side of the rotor, each flange having a central area (54) folded back to form a ring serving as a bearing for said shaft;
characterized in that:
the rotor includes a plastic rotor part (50) forming said shaft (51) and bearing the magnet;
said polar teeth are integral with a same tubular part (57), the cohesion of the tubular part being ensured by thin areas thereof connecting the rows of teeth of each pair together;
an annular disk (61) is integral with the tubular part (57) and placed about said tubular part at the interface between the two pairs of rows of teeth (59) and forming with the flanges (55) two areas, each designed to accommodate at least one coil (63); and
the coils are formed by isolated wire directly wound about the tubular part (57).

2. The motor of claim 1, characterized in that the flanges (55) have studs (55-1) for centering said tubular part (57), said studs and said bearing ring (54) being obtained from a same flat part by shaping and/or die stamping.

3. The motor of claim 1, characterized in that said tubular part (57) is formed by a flat rolled plate in which the rows of teeth (59) are precut.

4. The motor of claim 1, characterized in that at least one end of said shaft (51) has a specific shape obtained in a same casting operation of said rotor (10) and shaft.

5. The motor of claim 1, characterized in that said shaft (51) has an axial hole.
